Europäisches Patentamt

European Patent Office

Office européen des brevets

(11) Veröffentlichungsnummer: **0 087 495**
A1

(12) **EUROPÄISCHE PATENTANMELDUNG**

(21) Anmeldenummer: 82103694.4

(22) Anmeldetag: 30.04.82

(51) Int. Cl.³: **F 24 H 9/12**
**F 24 D 19/10**

(30) Priorität: 15.02.82 DE 8204105 U

(43) Veröffentlichungstag der Anmeldung:
07.09.83 Patentblatt 83/36

(84) Benannte Vertragsstaaten:
AT BE CH DE FR GB IT LI LU NL SE

(71) Anmelder: Kropla, Petrana, Dipl.-Ing.
Heckenstrasse 40
D-7100 Heilbronn(DE)

(72) Erfinder: Kropla, Petrana, Dipl.-Ing.
Heckenstrasse 40
D-7100 Heilbronn(DE)

(74) Vertreter: Keil, Rainer A., Dipl.-Phys. Dr. et al,
Patentanwälte KEIL & SCHAAFHAUSEN
Ammelburgstrasse 34
D-6000 Frankfurt am Main 1(DE)

(54) Ventil-Anordnung.

(57) Die Anmeldung bezieht sich auf eine Ventil-Anordnung für die Temperaturregelung mit einem über eine Muffe unmittelbar an einem Heizkörper angebrachten Ventil, gegebenenfalls Thermostatventil, mit einem Anschluß für die Zufuhr des Vorlaufwassers und einer Einrichtung für die Beimischung von Rücklaufwasser. Bei einer solchen Ventil-Anordnung ist bei einfacherem Aufbau und leichter Montage eine bessere Ausnutzung der fühlbaren Wärme des Vorlaufwassers dadurch vorgesehen, daß der Anschluß in eine Düse (5) mündet, deren Austrittsstrahl in eine Mischkammer eines Diffusors (6) einer Strahlpumpe gerichtet ist und daß der Diffusor in den Heizkörper unter Freihaltung eines einerseits mit dem Innenraum des Heizkörpers und andererseits mit der Ansaugzone des Düsenaustrittsstrahles in Strömungsverbindung stehenden Ringkanal (7) hineinragt.

Bild 1

0087495

KEIL&SCHAAFHAUSEN
PATENTANWÄLTE

K 70 P 1

Ventil-Anordnung

Die Erfindung bezieht sich auf eine Ventil-Anordnung für die
Temperaturregelung mit einem über eine Muffe unmittelbar an
einem Heizkörper angebrachten Ventil, gegebenenfalls Thermostatventil, mit einem Anschluß für die Zufuhr des Vorlaufwassers
und mit einer Einrichtung für die Beimischung von Rücklaufwasser.

Für die Raumtemperaturregelung an Heizkörpern sind Thermostatventile bekannt. Die Raumtemperatur ist dabei die Regelgröße.
Der Thermostatkopf ist Meßglied, Vergleichsstelle und Regler
in einem. Er wirkt auf das Ventil. Das Ventil verändert in seiner
Funktion als Stellglied des Regelkreises den Massenstrom des
warmen Vorlaufwassers. Es handelt sich also um eine Massenstromregelung. Der Einsatz solcher Thermostatventile setzt die genaue
Einstellung der Wassermengen über Einstellmöglichkeiten im Ventil
selber und genaue Druckregelung vor dem Ventil voraus. Andernfalls kommt es zu einer Ungenauigkeit der Regelung, die zu einer
erhöhten Rücklauftemperatur und damit zu einem erhöhten Energieverbrauch, sowie zu störenden unerwünschten Geräuschen führt.

Bekannt ist neben der Massenstromregelung auch die Mischungsregelung. Bei letzterer wird dem Vorlaufwasser ein variabler
Anteil des kälteren Rücklaufwassers beigemischt. Bei diesem
Verfahren muß bisher eine besondere Pumpe dafür Sorge tragen,
daß die Wasserumwälzung im Heizkörper sichergestellt und eine
direkte Strömung vom Vorlauf in den Rücklauf verhindert wird.
Hierfür ist ein zusätzliches äußeres Rohr für die Beimischung und ein Dreiwegeventil bzw. eine gesonderte Pumpe mit drei Anschlüssen notwendig.

Aufgabe der vorliegenden Erfindung ist es daher, eine Ventil-
Anordnung der gattungsgemäßen Art vorzuschlagen, die bei einfachem
Aufbau und leichter Montage eine bessere Nutzung der fühlbaren
Wärme des Vorlaufwassers zuläßt.

Diese Aufgabe wird erfindungsgemäß dadurch gelöst, daß der Anschluß in eine Düse mündet, deren Austrittsstrahl in eine Mischkammer eines Diffusors einer Strahlpumpe gerichtet ist und daß
der Diffusor in den Heizkörper unter Freihaltung eines einerseits mit dem Innenraum des Heizkörpers und andererseits mit
der Ansaugzone des Düsenaustrittsstrahles in Strömungsverbindung
stehenden Ringkanal hineinragt. Die Ventil-Anordnung enthält
also eine unmittelbar an dem Heizkörper angebaute Heizkörperstrahlpumpe, die zusätzliche Rückführleitungen am Zulaufstutzen entbehrlich machen. Die Beimischung von Rücklaufwasser zum Vorlaufwasser direkt in dem an dem Heizkörper angebrachten Ventil erfolgt unter Ausnutzung des Differenzdruckes zwischen Rücklaufwasser und Ansaugzone des Vorlaufwassers. Dadurch wird eine
weitgehende Auskühlung des Vorlaufwassers in dem Heizkörper
selbst erreicht. Das nach der Erfindung vorgesehene Ventil ist
einfach zu montieren. Die Arbeitsweise der Strahlpumpe führt
zu einem niedrigen Geräuschpegel. Die Wassermenge der einzelnen
Heizkörper kann dadurch begrenzt werden, daß die Düse des Ventils
je nach Heizkörper eine unterschiedliche Austrittsöffnung aufweist.

Bei einem Rippenheizkörper ragt der Diffusor vorteilhafterweise
wenigstens bis zu einer Öffnung in der Zwischenwand zwischen
erster und zweiter Rippe in den Heizkörper hinein. Dadurch werden
Kurzschlußströme verringert.

**0087495**
KEIL&SCHAAFHAUSEN
PATENTANWÄLTE

Die Kurzschlußströme können ganz verhindert werden, wenn zusätzlich zwischen Diffusor und Zwischenwand ein Dichtelement angeordnet ist.

Wenn gemäß einer weiteren Ausführungsform der Erfindung in die Austrittsöffnung der Düse ein axial verstellbarer Kegel hineinragt, läßt sich eine einfache Temperaturregelung vornehmen.

Dies läßt sich praktisch dadurch verwirklichen, daß der Kegel an einer von Hand, thermostatisch, elektrisch, pneumatisch oder hydraulisch verstellbaren Spindel gehalten ist.

Weitere Ziele, Merkmale, Vorteile und Anwendungsmöglichkeiten der vorliegenden Erfindung ergeben sich aus der nachfolgenden Beschreibung von Ausführungsbeispielen anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigt:

Bild 1    eine die Erfindung aufweisende Ventil-Anordnung, teilweise geschnitten, an einem Heizkörper montiert, und

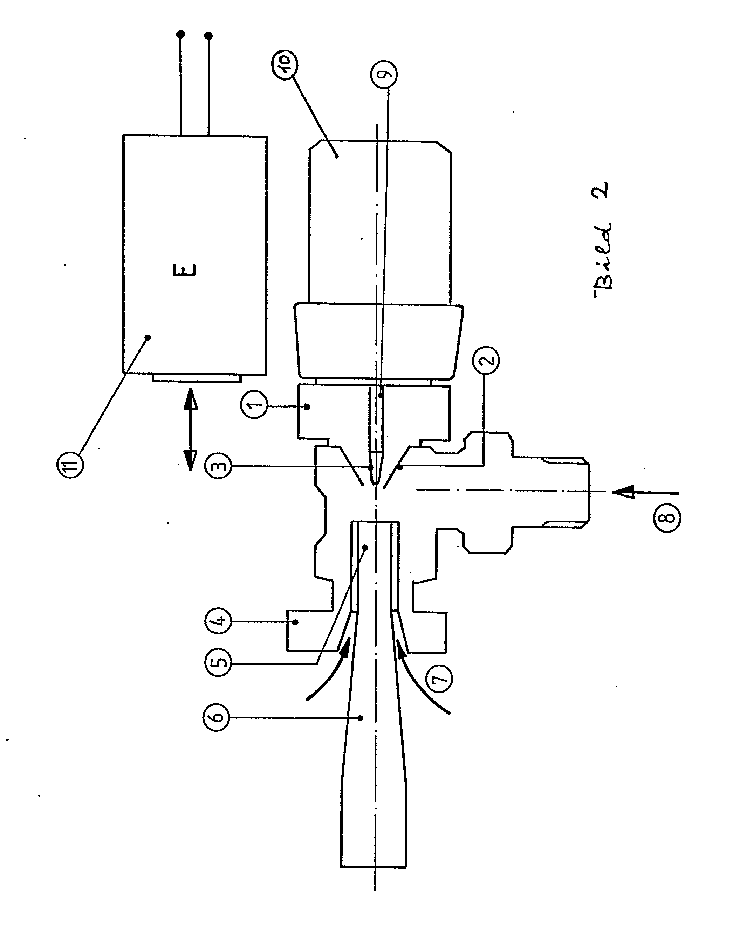

Bild 2    schematisch eine die Erfindung aufweisende Ventil-Anordnung.

Die erfindungsgemäße Ventilanordnung weist ein Heizkörperventil 1 mit einer Düse 2 auf, deren freier Austrittsöffnung mit einem Kegel 3 geändert werden kann. Der Kegel 3 ist am vorderen Ende einer Spindel 9 vorgesehen, welcher mittels eines von Hand, thermostatisch, elektrisch, pneumatisch oder hydraulisch betätigbaren Einstellelement 10 bzw. 11 axial verschiebbar ist. Das Ventilgehäuse ist über eine Muffe 4 unmittelbar an einem Heizkörper anzuschrauben. In der Muffe 4 sind eine Mischkammer 5
mit Diffusor 6 einer Strahlpumpe so angebracht, daß die Austrittsöffnung der Düse 2 auf die Mischkammer 5 gerichtet ist und ein
Ringkanal 7 frei bleibt, der einerseits mit dem Innenraum des
Heizkörpers und andererseits mit der Ansaugzone des Düsenaustrittsstrahles in Strömungsverbindung steht. Durch den Ringkanal
7 kann das Rücklaufwasser aus dem Heizkörper, von dem Vorlaufwasserstrahl angesaugt, in die Mischkammer 5 fließen. Das Vorlaufwasser wird der Düse 2 über einen seitlichen Anschluß 8 zugeführt. Die Temperaturregelung erfolgt durch axiale Verstellung
des Kegels 3.

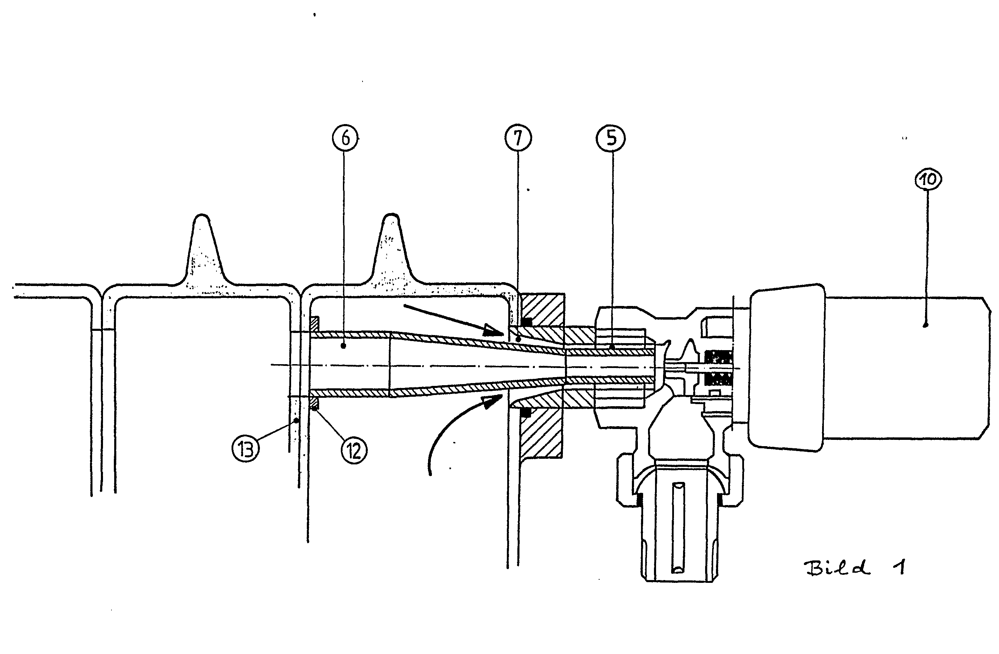

Gemäß Bild 1 ragt der Diffusor 6 bis zu einer Öffnung in der
Zwischenwand 13 zwischen der ersten und zweiten Rippe eines
Rippenheizkörpers. Durch ein zusätzliches Dichtelement 12 zwischen
Diffusor 6 und Zwischenwand 13 wird ein Kurzschlußstrom zum
Heizkörperaustritt verhindert.

Durch die erfindungsgemäße Mischregelung wird eine gleichmäßige
Temperatur, d.h. eine geringe Differenz zwischen maximaler und
minimaler Heizkörperoberflächentemperatur erreicht. Dies dient
der Behaglichkeit und vermindert die Geruchsbelästigung durch
verschwelenden Staub auf dem Heizkörper. Das Vorlaufwasser wird
bei der erfindungsgemäßen Ventil-Anordnung weitgehend abgekühlt,
was zu einem niedrigeren Vorlaufwasserverbrauch und damit einer
Energieersparnis führt.

15.2.1982

K 70 P 1

Dipl.-Ing. Petrana Kropla GmbH

Eisenbahnstr. 7

6054 Rodgau 1/Jügesheim

Ventil-Anordnung

Patentansprüche:

1.   Ventil-Anordnung für die Temperaturregelung, mit einem über eine Muffe unmittelbar an einem Heizkörper angebrachten Ventil, gegebenenfalls Thermostatventil, mit einem Anschluß für die Zufuhr des Vorlaufwassers und mit einer Einrichtung für die Beimischung von Rücklaufwasser, dadurch gekennzeichnet, daß der Anschluß (8) in eine Düse (2) mündet, deren Austrittsstrahl in eine Mischkammer (5) eines Diffusors (6) einer Strahlpumpe gerichtet ist und daß der Diffusor (6) in den Heizkörper unter Freihaltung eines einerseits mit dem Innenraum des Heizkörpers und andererseits mit der Ansaugzone des Düsenaustrittsstrahles in Strömungsverbindung stehenden Ringkanal (7) hineinragt.

**0087495**
KEIL&SCHAAFHAUSEN
PATENTANWÄLTE

2.   Ventil-Anordnung nach Anspruch 1 an einem Rippenheizkörper, dadurch gekennzeichnet, daß der Diffusor (6) wenigstens bis zu einer Öffnung in der Zwischenwand (13) zwischen erster und zweiter Rippe in den Heizkörper hineinragt.

3.   Ventil-Anordnung nach Anspruch 2, dadurch gekennzeichnet, daß zwischen Diffusor (6) und Zwischenwand (13) ein Dichtelement (12) angeordnet ist.

4.   Ventil-Anordnung nach einem der Ansprüche 1 bis 3, dadurch gekennzeichnet, daß in die Austrittsöffnung der Düse (2) eine axial verstellbarer Kegel (3) hineinragt.

5.   Ventil-Anordnung nach Anspruch 4, dadurch gekennzeichnet, daß der Kegel (3) an einer von Hand, thermostatisch, elektrisch, pneumatisch oder hydraulisch verstellbaren Spindel (9) gehalten ist.

KEIL & SCHAAFHAUSEN
PATENTANWÄLTE

Bild 1

KEIL&SCHAAFHAUSEN
PATENTANWÄLTE

# EUROPÄISCHER RECHERCHENBERICHT

**0087495**
Nummer der Anmeldung

EP 82 10 3694

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-1 135 510 (ZANIROLI) <br> * Seite 1, rechte Spalte, Absatz 6 * | 1 | F 24 H 9/12 <br> F 24 D 19/10 |
| | --- | | |
| A | DE-A-1 579 879 (FALTAY) <br> * Seite 4, Absatz 3, Seite 5, Absatz 1 * | 4 | |
| | --- | | |
| A | US-A-4 183 722 (ROEDER) | | |
| | ----- | | |

**RECHERCHIERTE SACHGEBIETE (Int. Cl. 3)**

F 04 F 5/00
F 24 D 19/00
F 24 H 9/00
G 05 D 23/00

Der vorliegende Recherchenbericht wurde für alle Patentansprüche erstellt.

| Recherchenort <br> BERLIN | Abschlußdatum der Recherche <br> 11-05-1983 | Prüfer <br> PIEPER C |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82